Europäisches Patentamt

European Patent Office    (11) Numéro de publication:    **0 056 228**
                                                            A2
Office européen des brevets

(12)                    **DEMANDE DE BREVET EUROPEEN**

(21) Numéro de dépôt: 82100004.9        (51) Int. Cl.³: **F 16 B 21/14**

(22) Date de dépôt: 04.01.82

(30) Priorité: 09.01.81 FR 8100592        (71) Demandeur: Aubrun, Claude, Renage, F-38140 Rives sur Fure (FR)

(43) Date de publication de la demande: 21.07.82     (72) Inventeur: Aubrun, Claude, Renage, F-38140 Rives sur
Bulletin 82/29                                      Fure (FR)

                                                   (74) Mandataire: Casalonga, Axel et al, BUREAU D.A.
                                                   CASALONGA OFFICE JOSSE & PETIT
(84) Etats contractants désignés: AT BE DE FR GB IT LU NL     Baaderstrasse 12-14, D-8000 München 5 (DE)

(54)    Goupille du genre à tête et à dispositif annulaire de maintien.

(57) Goupille du type comprenant une broche (3), une tête (2), un dispositif annulaire (4) destiné à s'opposer à l'enlèvement de la goupille et des moyens de retenue, ces moyens de retenue comprenant un élément formant butée (9) qui est solidaire de la tête (2) et qui coopère avec au moins l'une des portions d'extrémité (4a) du dispositif annulaire (4) de manière à limiter le déplacement de ce dernier dans le sens qui l'éloigne de sa position fermée.

Application de cette goupille, notamment en agriculture, au maintien d'éléments mécaniques sur une pièce telle qu'un axe.

"Goupille du genre à tête et à dispositif annulaire de maintien".

---------

La présente invention concerne les goupilles du genre à tête et à dispositif annulaire destiné à leur maintien sur les axes, goujons, broches, chevilles ou pitons d'attache qui les reçoivent.

Les goupilles de ce genre sont en général munies d'un anneau ou clip flexible formant ressort qui s'articule dans deux trous décalés prévus latéralement dans la tête de la goupille de telle sorte que l'anneau reste dans sa position de maintien grâce à son effet de ressort.

De telles goupilles sont d'un emploi peu fiable. En effet, l'anneau perd assez rapidemment de sa flexibilité, et peut s'ouvrir d'autant plus facilement que les goupilles sont soumises en général à des trépidations ou des heurts. En outre, lorsque leur anneau est ouvert, les goupilles s'échappent et les matériels qu'elles maintenaient se désaccouplent et peuvent en conséquence subir des détériorations.

Afin de remédier à ces inconvénients, on a déjà proposé différents moyens parmi lesquels on a cherché à faire varier l'angle que font les trous prévus dans la tête et à faire varier la forme et la qualité de l'anneau flexible formant ressort. On a également proposé de former des bossages arrondis sur la tête de la goupille qui coopèrent avec l'anneau ou de prévoir une encoche à la base de la broche de la goupille dans laquelle pénètre le clip. Cependant, aucune de ces solutions n'apparaît dans la pratique comme satisfaisante car l'anneau peut encore complètement s'ouvrir suite à son usure ou suite à des heurts relativement violents comme ceux que l'on rencontre dans l'agriculture.

La présente invention résoud les problèmes que posent toujours les goupilles de l'état de la technique et propose une goupille dont les différentes variantes de réalisation permettent une retenue de l'anneau en position fermée très efficace.

La goupille selon la présente invention est du type comprenant une broche, une tête à l'une des extrémités de la broche et un dispositif de forme sensiblement annulaire dont les extrémités qui forment pivots sont articulées sur ladite tête et de chaque côté de cette dernière selon des axes transversaux sensiblement parallèles et qui est destiné à venir autour de la pièce recevant ladite broche en vue de s'opposer à l'enlèvement de ladite goupille, des moyens de retenue étant prévus pour empêcher le dispositif annulaire de quitter ou de s'éloigner de la position fermée dans laquelle il s'oppose à l'enlèvement de la goupille.

Conformément à la présente invention, lesdits moyens de retenue comprennent un élément formant butée qui est solidaire de ladite tête et qui coopère avec au moins l'une des portions d'extrémité du dispositif annulaire de manière à limiter le déplacement de ce dernier dans le sens qui l'éloigne de ladite position fermée.

Dans un premier mode de réalisation préféré, ledit élément formant butée peut être formé par un goujon transversal solidaire de ladite tête, goujon qui limite le déplacement angulaire du dispositif annulaire.

Dans une première variante de ce mode de réalisation, dans laquelle les extrémités du dispositif annulaire sont articulées sur ladite tête selon des axes transversaux décalés, ledit goujon transversal peut avantageusement être formé par l'une des extrémités formant pivots du dispositif annulaire, extrémité qui traverse complètement ladite tête et qui s'étend en avant de la partie d'extrémité du dispositif annulaire adjacente à son autre extrémité formant pivot.

Selon cette variante, lesdits moyens de retenue peuvent également comprendre une cale déplaçable le long de ladite extrémité formant goujon du dispositif annulaire en vue d'être disposée entre cette extrémité formant goujon et ladite partie d'extrémité du dispositif annulaire et d'en être retirée.

Dans une autre variante, selon laquelle également les extrémités du dispositif annulaire sont articulées sur ladite tête selon les axes transversaux décalés, ledit goujon transversal traverse complètement ladite tête et présente à l'une de ses extrémités une collerette d'arrêt formant épaulement qui prend appui contre ladite tête et un logement recevant l'une des extrémités formant pivots du dispositif annulaire, l'autre extrémité dudit goujon s'étendant en avant de la partie d'extrémité du dispositif annulaire adjacente à l'autre extrémité formant pivot de ce dernier en vue de former ladite butée.

Dans cette autre variante, ladite autre extrémité dudit goujon peut avantageusement être biseautée de manière que
ce goujon forme une targette pour ladite partie d'extrémité du dispositif annulaire adjacente à son autre extrémité formant pivot.

Selon cette autre variante, ladite autre extrémité dudit goujon peut, dans une réalisation différente, présenter une
encoche opposée à une partie pleine, ce goujon présentant un moyen en
vue de sa rotation pour disposer en face de ladite partie d'extrémité
du dispositif annulaire adjacente à son autre extrémité formant pivot
soit ladite encoche soit ladite partie pleine qui forme butée.

Selon cette autre variante, des moyens de translation peuvent, dans une réalisation différente, être prévus pour
déplacer transversalement ledit goujon dans ladite tête entre une
position avancée dans laquelle ladite autre extrémité dudit goujon
forme ladite butée et une position de retrait dans laquelle ladite
autre extrémité dudit goujon est dégagée et le dispositif annulaire
est libéré.

De manière particulièrement avantageuse, ladite
collerette dudit goujon et ladite tête de la goupille peuvent présenter en vis-à-vis des surfaces inclinées et ledit goujon peut présenter
un moyen en vue de sa rotation, de telle sorte que la rotation dudit
goujon permet le déplacement transversal de ce dernier par glissement
desdites surfaces l'une sur l'autre entre ladite position avancée
et ladite position de retrait. En outre, lesdites surfaces inclinées
peuvent être conformées pour maintenir ledit goujon à sa position
avancée ou à sa position de retrait même si le dispositif annulaire
est pivoté.

Dans une troisième variante dudit mode de réalisation, ledit goujon transversal peut s'étendre au travers de ladite
tête et présenter au moins une encoche et une partie pleine formant
butée, ce goujon étant déplaçable en vue de disposer soit sa partie
pleine soit son encoche en face de la partie d'extrémité du dispositif
annulaire adjacente à l'une de ses extrémités formant pivots.

Selon cette troisième variante, ladite encoche
et ladite partie pleine peuvent se suivre transversalement, des
moyens pouvant être prévus en vue de déplacer transversalement ledit
goujon.

Selon cette troisième variante, ladite encoche
et ladite partie pleine peuvent, dans une réalisation différente,

4

être opposées, des moyens pouvant alors être prévus en vue de faire pivoter ledit goujon.

Dans une quatrième variante dudit mode de réalisation, ledit goujon transversal peut être fixé à la tête de la goupille et dépasser latéralement en avant d'au moins la partie d'extrémité du dispositif annulaire adjacente à l'une de ses extrémitées formant pivots, une cale étant déplaçable le long dudit goujon en vue d'être disposée entre ce goujon et ladite partie d'extrémité du dispositif annulaire et d'en être retirée.

Selon ces deux dernières variantes, ledit goujon transversal peut avantageusement s'étendre en avant du dispositif annulaire. Cependant, si le dispositif annulaire présente au moins un prolongement s'étendant latéralement à ladite tête au-delà de l'une de ses extrémités formant pivots, ledit goujon transversal pourrait s'étendre au travers de ladite tête en arrière de ce prolongement.

Dans une cinquième variante dudit mode de réalisation, ledit goujon transversal peut être prévu solidaire d'au moins une biellette articulée sur ladite tête et susceptible de pivoter de manière à disposer ce goujon en avant de la partie d'extrémité du dispositif annulaire lorsque ce dernier est en position fermée.

Dans un deuxième mode de réalisation préféré de la goupille selon la présente invention, dans lequel ladite broche présente une encoche sensiblement axiale dans laquelle peut être introduit le dispositif annulaire, on propose qu'au moins l'une des extrémités formant pivots du dispositif annulaire soit articulée dans un évidement latéral oblong de ladite tête et que ledit élément formant butée soit un goujon ou pointeau qui dans sa position avancée pénètre dans ledit évidement et forme une butée pour ladite extrémité formant pivot du dispositif annulaire dans ledit évidement en vue de maintenir le dispositif annulaire dans ladite encoche de la broche.

Dans un troisième mode de réalisation préféré de la goupille selon la présente invention, ledit élément formant butée peut être constitué par au moins un bossage latéral prévu sur ladite tête et présentant une face transversale contre laquelle la partie d'extrémité du dispositif annulaire adjacente à l'une desdites extrémités formant pivots lorsque ce dispositif annulaire est à ladite position fermée, ledit bossage étant conformé en vue de permettre le pivotement du dispositif annulaire jusqu'à cette positon fermée.

Dans un quatrième mode de réalisation préféré de la goupille selon la présente invention, ledit élément formant butée peut être un anneau solidaire du dispositif annulaire pour former avec ce dispositif annulaire un ressort en forme de V déformable, ledit anneau venant en appui contre une butée formée sur ladite tête en avant de cette dernière lorsque ledit ressort est en forme de V, en vue de maintenir le dispositif annulaire dans ladite position fermée.

Dans une variante de ce mode de réalisation, le dispositif annulaire et ledit anneau peuvent ne former qu'une seule pièce.

La présente invention sera mieux comprise à l'étude de plusieurs variantes de réalisation de la goupille selon la présente invention, variantes décrites à titre d'exemples non limitatifs et illustrées schématiquement sur le dessin annexé dans lequel ;

- les figures 1 à 3 montrent différentes variantes d'un premier mode de réalisation ;

- les figures 4 à 8 montrent différentes variantes d'un deuxième mode de réalisation ;

- les figures 9 à 18 montrent différentes variantes d'un troisième mode de réalisation ;

- les figures 19 et 20 montrent deux variantes d'un quatrième mode de réalisation ;

- les figures 21 et 22 montrent un cinquième mode de réalisation ;

et les figures 23 à 25 montrent des variantes d'un sixième mode de réalisation.

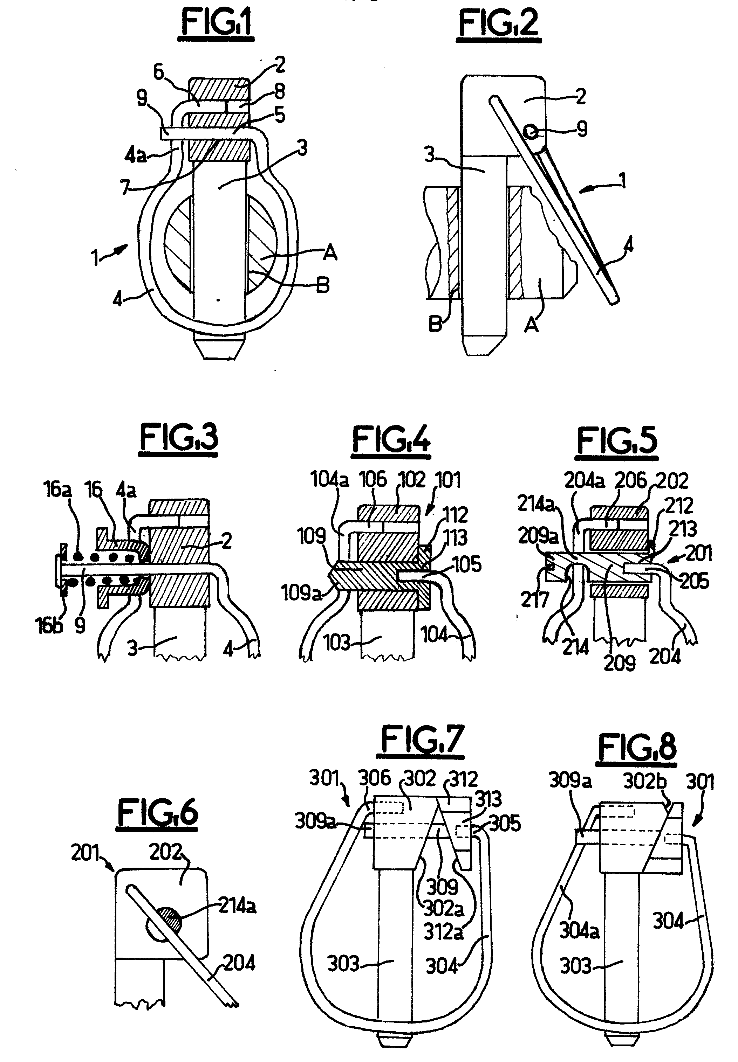

Comme les montrent les figures 1 et 2, une goupille comprend en général une tête 2, une broche 3 qui prolonge la tête 2 et un dispositif sensiblement annulaire 4 dont les extrémités 5 et 6 pénètrent dans des trous 7 et 8 pratiqués dans la tête 2 de manière à former des pivots d'articulation selon des axes transversaux à la tête 2 sensiblement parallèles, la goupille représentée sur les figures 1 et 2 étant repérée d'une manière générale par la référence 1. La broche 3 est disposée dans un orifice transversant B d'un axe A, l'anneau 4 étant destiné à venir autour de l'axe A en prenant appui sur la broche 3 de manière à s'opposer à l'enlèvement de la goupille 1 et pouvant être écarté de cette positon en vue d'enlever la goupille.

0056228

Dans l'exemple représenté sur les figures 1 et 2, l'extrémité formant pivot 5 de l'anneu 4 traverse complètement la tête 2 et s'étend en avant et à distance de la partie d'extrémité 4a de l'anneau 4 adjacente à son extrémité formant pivot 6 en formant un goujon 9 de telle sorte que l'anneau peut effectuer un déplacement limité à un angle d'environ 15 à 30°, entre la broche 3 et le goujon formant butée 9. Comme l'anneau 4 est flexible, il a toujours tendance à s'éloigner du goujon 9 et à venir en appui contre la broche 3. Lorsqu'il est tiré jusqu'en butée contre le goujon 9, il ne gène pas ni pour le montage sur l'arbre A ni pour son démontage car son angle d'ouverture est suffisant pour qu'il contourne l'extrémité de cet arbre.

Dans la variante représentée sur la figure 3, on a prévu une cale annulaire 16 montée sur le goujon 9 et rappelée en direction de la tête 2 par l'intermédiare d'un ressort 16a qui prend appui d'une part sur la cale 16 et d'autre part sur une rondelle 16b maintenue par un sertissage de l'extrémité du goujon 9. Cette cale peut être disposée entre la partie d'extrémité 4a de l'anneau 4 et le goujon 9 de manière à bloquer cet anneau 4 en appui contre la broche 3 mais peut en être retiré par un déplacement de cette dernière à l'encontre du ressort 16a en vue de l'ouverture de l'anneau 4 comme vu précédemment à propos des figures 1 et 2.

Dans les modes de réalisation qui suivent, le goujon formant butée n'est plus formé par une partie de l'anneau 4 mais est formé d'une manière indépendante.

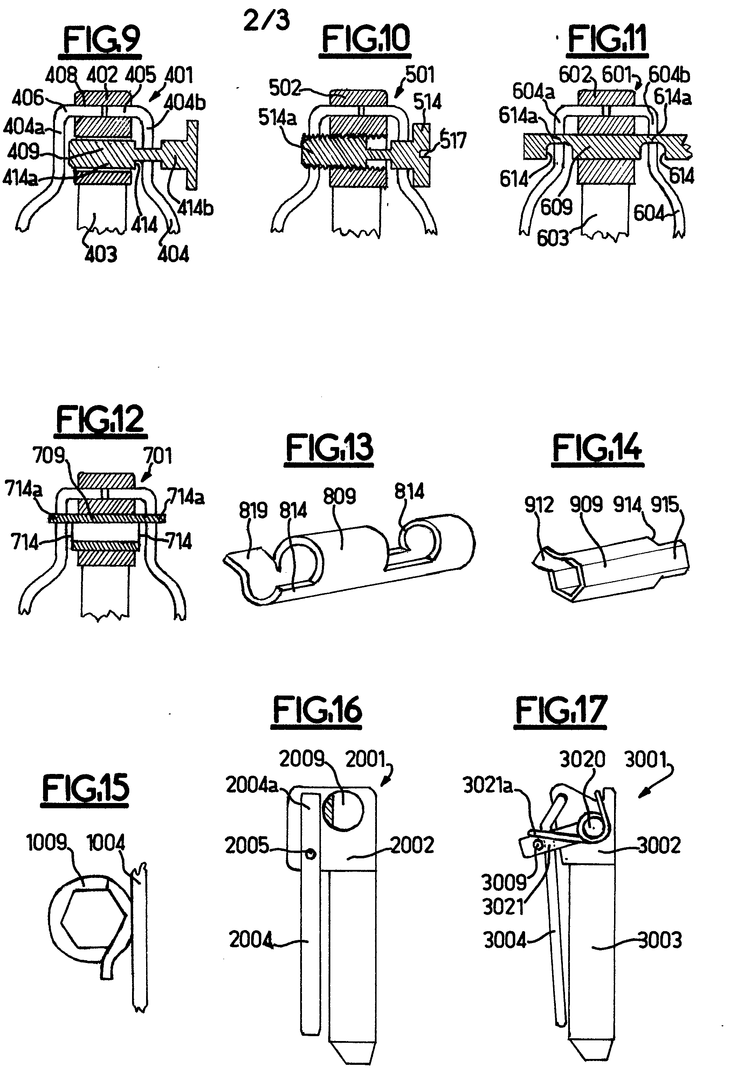

Dans l'exemple représenté sur la figure 4, le goujon transversal 109 traverse complètement la tête 102 de la goupille 101 et présente à l'une de ses extrémités une collerette d'arrêt formant épaulement 112 qui est maintenue en appui contre la tête 102 sous l'effet de la flexibilité de l'anneau 104 et un logement 113 recevant l'extrémité formant pivot 105 de l'anneau 104 tandis que son autre extrémité formant pivot est articuléesur la tête 102. L'autre extrémité 109a du goujon 109 s'étend juste en avant de la partie d'extrémité 104a de l'anneau 104 adjacente à son autre extrémité formant pivot 105 et est biseautée. Comme l'anneau 104 est flexible et que l'extrémité 109a du goujon 109 est biseautée, ce goujon 109 se comporte comme une targette et permet de maintenir l'anneau 104 en position fermée en appui contre la broche 103 tout en autorisant son ouverture complète avec un effort important.

On aurait pu, dans une réalisation différente, fileter le goujon 109, tarauder la tête 102 et prévoir une collerette 112 hexagonale, en vue d'une translation transversale du goujon 109 pour retirer l'extrémité 109a d'en face la partie d'extrémité 104a.

Comme dans l'exemple représenté sur la figure 4, la goupille 201 représentée sur les figures 5 et 6 comportent un goujon transversal 9 qui traverse la tête 202 et qui comporte une collerette d'arrêt 212 en appui contre la tête 202 et un logement 213 recevant l'extrémité formant pivot 205 de l'anneau 204 tandis que l'autre extrémité formant pivot 206 de cet anneau est articulée directement sur la tête 202.

Dans cet exemple, l'autre extrémité 209a du goujon 209 comporte à sa périphérie une partie pleine 214a et un évidement ou encoche 214 qui sont formés en face de la partie d'extrémité 204a adjacente à l'extrémité formant pivot 206 de l'anneau 204. L'extrémité 209a du goujon 209 présente une gorge pour tournevis 217 en vue de faire pivoter ce goujon 209 de manière qu'il puisse présenter face à la partie d'extrémité 204a de l'anneau 204 adjacente à son extrémité formant pivot 206 soit la partie pleine 214a qui alors forme une butée maintenant l'anneau 204 en position fermée, soit l'encoche 214 qui autorise un déplacement angulaire de l'anneau 204 d'un angle d'environ 15 à 30 degrés, en vue du montage ou du démontage de la goupille 201 comme dans l'exemple représenté sur les figures 1 et 2.

Il est à noter que la gorge pour tournevis 217 pourrait être remplacée par tout autre moyen connu permettant la rotation du goujon 209 tel que par exemple un levier ou, sur ce goujon 209, des surfaces polygonées internes ou externes susceptibles de recevoir une clé.

Dans l'exemple représenté sur les figures 7 et 8, la goupille 301 comporte également un goujon 309 qui traverse complètement la tête 302 et qui comporte à l'une de ses extrémités une collerette d'arrêt formant épaulement 312 et un logement 313 recevant l'extrémité formant pivot 305 de l'anneau 304 dont l'autre extrémité 306 est articulée sur la tête 302 de manière décalée.

Dans cet exemple, la tête 302 de la goupille 301 et l'épaulement 312 du goujon 309 présentent respectivement et en vis-à-vis des surfaces planes 302a et 312a qui sont inclinées par rapport à l'axe du goujon 309 de telle sorte que par rotation du goujon 309, sous l'effet des surfaces 302a et 312a de la tête 302 et de l'épaulement 312 et sous l'effet de la flexibilité de l'anneau 304, le goujon 309 peut se déplacer transversalement entre une position avancée et une position de retrait, l'anneau rappelant le goujon vers sa position avancée.

Dans sa position avancée, les surfaces 302a et 312a sont en contact et l'autre extrémité 309a du goujon 309 s'étend en avant de la partie d'extrémité 304a de l'anneau 304 adjacente à son extrémité formant pivot 306, de manière à former une butée pour cet anneau 304 lorsqu'il est rabattu dans sa position fermée en contact avec la broche 303, cette position du goujon 301 étant visible sur la figure 8.

Dans sa position de retrait, les surfaces 302a et 312a de la tête 302 et de l'épaulement 312 forment un V et l'extrémité 309a du goujon 309 est rentrée dans la tête et l'anneau 304 est libéré si bien que ce dernier peut être déplacé entre sa position fermée et sa position d'ouverture complète. Cette position du goujon 309 est visible sur la figure 7 où l'on voit que l'anneau 304 peut passer devant l'extrémité 309a du goujon 304 sans la rencontrer.

En vue du maintien du goujon 309 dans sa position de retrait, on a prévu dans la partie avancée de la tête 302 une surface plane 302b inclinée dans l'autre sens par rapport à la surface 302a sur laquelle vient en appui la surface 312a de l'épaulement 312 lorsque le goujon 309 est dans sa position de retrait, si bien qu'il est possible de manoeuvrer l'anneau 304 sans pour autant faire pivoter le goujon 309.

Dans l'exemple représenté, en vue de faire pivoter le goujon 309, l'épaulement 312 se présente sous la forme d'un écrou. On aurait pu prévoir un autre moyen tel qu'une gorge pour tournevis.

Dans une variante de réalisation de l'exemple représenté sur les figures 7 et 8, on pourrait former des surfaces 302a, 302b et 312a courbes.

Dans l'exemple représenté sur la figure 9, l'anneau 404 est articulé symétriquement de part et d'autre de la tête 402 de la goupille 401 dans un trou transversant 408 et un goujon transversal 409 traverse complètement la tête 402 et peut s'étendre en avant des branches 404a et 404b de l'anneau 404 adjacentes à ses extrémités formant pivots 405 et 406. Le goujon 409 présente une encoche ou gorge annulaire 414 qui sépare deux parties pleines 414a et 414b, la partie 414a s'étendant dans la tête 402 et ayant une longueur sensiblement égale à la largeur de cette dernière. Par déplacement transversal, le goujon 409 peut occuper une première position dans laquelle la partie d'extrémité 404a de l'anneau 404 est libre et la gorge 414 est en face de la partie d'extrémité 404b de l'anneau 404 et une deuxième position dans laquelle les parties pleines 414a et 414b du goujon 409 sont respectivement en face des parties d'extrémité 404a et 404b de l'anneau 404. Dans ladite première position, l'anneau 404 peut se déplacer suivant un angle d'environ 15 à 30 degrés, la branche 404b pénétrant dans l'encoche 414, tandis que dans la deuxième position l'anneau 404 est bloqué en appui contre la broche 403.

Dans l'exemple représenté sur la figure 9, la partie pleine 414a du goujon 409 est lisse si bien que le déplacement transversal de ce goujon peut s'effectuer simplement par glissement.

Par contre, dans l'exemple représenté sur la figure 10, dans lequel la goupille 501 a une structure générale semblable à celle de la goupille 401 représentée sur la figure 9, on a prévu de fileter la partie 514a du goujon 514 et de tarauder de manière correspondante la tête 502 et on a prévu à l'une des extrémités du goujon 514 une gorge pour tournevis 517, en vue d'effectuer le déplacement transversal du goujon 514 entre lesdites première et deuxième positions par vissage ou dévissage.

A la différence des goupilles 401 et 501 représentées sur les figures 9 et 10, la tête 602 de la goupille 601 représentée sur la figure 11 est traversée par un goujon transversal 609 qui présente de part et d'autre de la tête 602, symétriquement et en face des parties d'extrémité 604a et 604b de l'anneau 604, une partie pleine formant butée 614 opposée à un évidement ou une encoche 614. L'anneau peut être pivoté de manière à présenter en face des parties d'extrémité 604a et 604b soit la partie pleine formant butée maintenant l'anneau 604 en appui contre la broche 603 soit les encoches 614 qui autorisent un pivotement de l'anneau 604 suivant un angle d'environ 15 à 30 degrés, les parties d'extrémité 604a et 604b de l'anneau 604 pénétrant dans les encoches 614. En vue du pivotement du goujon 609, on peut également prévoir à l'une de ses

**0056228**

extrémités une gorge pour tournevis ou une tête pour clé.

La figure 12 montre une goupille 701 qui peut fonctionner de la même manière que la goupille 601 représentée sur la figure 11. Cependant, dans ce cas, le goujon 709 est creux et les encoches 714 sont délimitées par des parties pleines 714a en forme d'ergots transversaux d'extrémité.

Les figures 13, 14 et 15 montrent des variantes de réalisation des goujons 609 et 709, utilisables dans les goupilles 601 et 701 représentées sur les figures 11 et 12.

On voit sur la figure 13 un goujon tubulaire 809 à deux encoches 814 qui présente un pan rabattu 819 susceptible de former une butée en rotation pour le goujon 809.

On voit sur la figure 14, un goujon 909 tubulaire et de section polygonée en vue de recevoir une clé, ce goujon 909 présentant à l'une de ses extrémités une encoche 914 délimitée par un ergot transversal d'extrémité 915 et à son autre extrémité un pan rabattu 912 formant un épaulement destiné à venir en butée contre la tête de la goupille.

Sur la figure 15, on montre un goujon 1009 tubulaire présentant un méplat extérieur 1018 susceptible de venir en appui sur l'anneau 1004 pour un blocage en rotation du goujon 1009.

La goupille 2001 représentée sur la figure 16 constitue une variante de réalisation des goupilles représentées sur les figures 9 à 15. Son goujon transversal formant butée 2009 est cette fois placé derrière un prolongement 2004a de l'anneau 2004 qui s'étend au-delà de l'axe formant pivot 2005 de ce dernier, le goujon 2009 pouvant présenter la structure de l'un des goujons des figures 9 à 15.

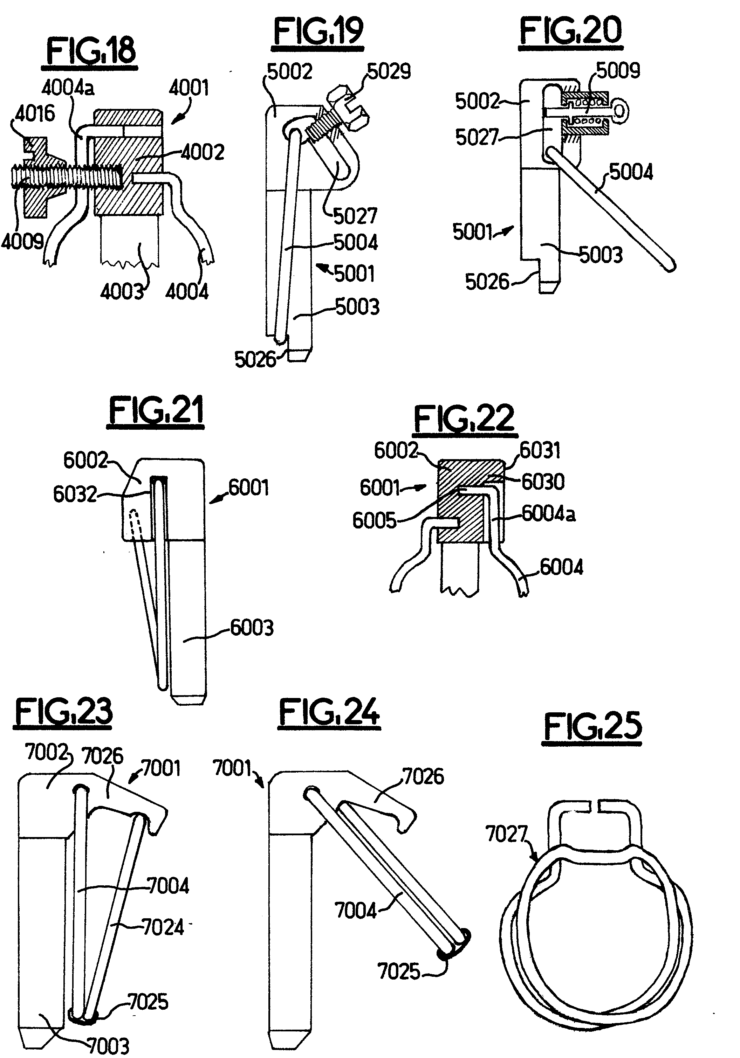

Dans l'exemple représenté sur la figure 17, le goujon 3009 ne traverse plus la tête 3002 de la goupille 3001 mais s'étend devant cette tête et est porté par deux biellettes latérales 3021 articulées sur la tête 3002 par l'intermédiaire d'un axe transversal 3020 de manière à pouvoir disposer le goujon 3009 devant l'anneau 3004 pour son maintien dans la position fermée en appui contre la broche 3003 ou de le disposer au-dessus de la tête 3002 en vue de l'ouverture de cet anneau. On a prévu en outre un ressort de rappel 3021a des biellettes 3021 dans le sens du maintien de l'anneau 3004.

De manière opposée aux exemples représentées sur les figures 4 à 17, la figure 18 montre une goupille 4001 qui se rapproche plutôt de la goupille représentée sur la figure 3. En effet, la tête 4002 de cette goupille porte un goujon transversal 4009 qui est fixée à la tête 4002 et qui s'étend devant la partie d'extrémité 4004a de l'anneau 4004 et à distance de ce dernier en vue de limiter l'ouverture de l'anneau 4004 à environ 15 à 30 degrés. Le goujon 4009 est fileté et porte une cale 4016 susceptible d'être vissée ou dévissée le long de ce goujon 4009 pour être disposée ou retirée de l'espace séparant la partie d'extrémité 4004a de l'anneau 4004 et le goujon 4009 pour un blocage de l'anneau 4004 contre la broche 4003.

Dans les exemples représentées sur les figures 19 et 20, les goupilles 5001 ont une structure différente. En effet, l'extrémité de leur broche 5003 présente une encoche axiale 5026 dans laquelle peut     venir leur anneau 5004. Les extrémités formant pivots des anneaux 5004 sont articulées dans des évidements oblongs latéraux 5027 de telle sorte que leur anneau 5004 peut se déplacer axialement dans ces évidements 5027 et contourner l'extrémité des broches 5005 pour être disposé dans leur encoche d'extrémité 5026. En vue de maintenir l'anneau 5004 dans cette position, on a prévu, dans l'exemple représenté sur la figure 19, un goujon se présentant sous la forme d'une vis pointeau 5029 et, dans l'exemple représenté sur la figure 20, un goujon 5009 se présentant sous la forme d'un pointeau et sur lequel agit un ressort de rappel, les goujons 5029 et 5009 étant susceptibles de pénétrer à l'intérieur des évidements oblongs 5029 de manière à former une butée pour les extrémités formant pivot des anneaux 5004.

Dans l'exemple représenté sur les figures 21 et 22, la goupille 6001 ne comporte plus de goujon mais sa tête 6002 présente un bossage latéral 6030 qui présente une surface latérale continue 6031 et une face transversale 6032 contre laquelle vient buter la partie d'extrémité 6004a de l'anneau 6004 adjacente à son extrémité 6005 formant pivot, lorsque l'anneau 6004 est en position fermée en butée contre la broche 6003, en vue de s'opposer à son ouverture. Comme le bossage 6030 de la tête 6002 de cette goupille présente une surface latérale continue 6031, il permet le pivotement sans difficulté de l'anneau 6004 jusqu'à sa position fermée dans laquelle sa partie 6004a est derrière la face transversale 6032. Par contre, pour l'ouverture de l'anneau 6004, il faudra faire monter la partie d'extrémité 6004a de l'anneau 6004 sur la surface latérale 6031 du bossage 6030. Dans une variante, la face 6032 du bossage 6002 pourrait être inclinée pour que la partie 6004a ait tendance à s'éloigner du bord du bossage 6030. Dans une autre variante, la face 6032 pourrait également être prévue à distance de la partie d'extrémité 6004a lorsque l'anneau 6004 est en appui contre la broche 6003.

Dans l'exemple représenté sur les figures 23 et 24, la goupille 7001 ne comporte plus de goujon comme dans les exemples précédents mais comporte, en tant qu'élément formant butée pour l'anneau 7004, un deuxième anneau 7024 qui est réuni à l'anneau 7004 par l'intermédiaire d'un élément formant ressort 7025 de telle sorte que les anneaux 7024 et 7004 forment un V déformable. La tête 7002 de la goupille 7004 représentée sur les figures 23 et 24 présente un prolongement 7026 contre lequel vient en appui l'anneau 7024 lorsque l'anneau 7004 est rabattu et en appui sur la broche 7003, comme le montre la figure 23. Par rapprochement des anneaux 7024 et 7004 à l'encontre du ressort 7025, l'anneau 7024 se dégage de la butée 7026 et l'anneau 7004 peut s'éloigner de la broche 7003 en pivotant d'un angle d'environ 15 à 30 degrés, comme dans l'exemple représenté notamment sur les figures 1 et 2, de manière à permettre le montage et le démontage de la goupille 7004.

Sur la figure 25, on a représenté une variante de réalisation de l'exemple représenté sur les figures 23 et 24, variante selon laquelle les anneaux 7004 et 7024 sont réalisés en une seule pièce et sont directement formés par torsion en double anneau d'un fil dont ses anneaux forment un V.

La présente invention ne se limite pas aux exemples ci-dessus décrits. Bien d'autres variantes de réalisation sont également possibles sans sortir du cadre de la présente invention définie par les revendications annexées.

REVENDICATIONS

1. Goupille du type comprenant une broche, une tête à l'une des extrémités de la broche et un dispositif de forme sensiblement annulaire dont les extrémités qui forment pivots sont articulées sur ladite tête et de chaque côté de cette dernière selon des axes transversaux sensiblement parallèles et qui est destiné à venir autour de la pièce recevant ladite broche, en vue de s'opposer à l'enlèvement de ladite goupille, des moyens de retenue étant prévus pour empêcher le dispositif annulaire de quitter ou de s'éloigner de la position fermée dans laquelle il s'oppose à l'enlèvement de la goupille, caractérisée par le fait que lesdits moyens de retenue comprennent un élément formant butée qui est solidaire de ladite tête et qui coopère avec au moins l'une des portions d'extrémité du dispositif annulaire de manière à limiter le déplacement de ce dernier dans le sens qui l'éloigne de ladite position fermée.

2. Goupille selon la revendication 1, caractérisée par le fait que ledit élément formant butée est un goujon transversal solidaire de ladite tête, goujon qui limite le déplacement angulaire du dispositif annulaire.

3. Goupille selon la revendication 2, les extrémités du dispositif annulaire étant articulées sur ladite tête selon des axes transversaux décalés, caractérisée par le fait que ledit goujon transversal (9) est formé par l'une des extrémités (5) formant pivots du dispositif annulaire (4), extrémité (5) qui traverse complètement ladite tête (2) et qui s'étend en avant de la partie d'extrémité (4a) du dispositif annulaire adjacente à son autre extrémité formant pivot (6).

4. Goupille selon la revendication 3, caractérisée par le fait que lesdits moyens de retenue comprennent une cale (16) déplaçable le long de ladite extrémité formant goujon (9) du dispositif annulaire (4) en vue d'être disposée entre cette extrémité formant goujon (9) et ladite partie d'extrémité (4a) du dispotif annulaire et d'en être retirée.

5. Goupille selon la revendication 2, les extrémités du dispositif annulaire étant articulées sur ladite tête selon des axes transversaux décalés, caractérisée par le fait que ledit goujon transversal traverse complètement ladite tête et présente à l'une de ses extrémités une collerette d'arrêt formant épaulement qui prend appui contre ladite tête et un logement recevant l'une des extrémités formant pivots du dispositif annulaire, l'autre extrémité dudit goujon s'étendant en avant de la partie d'extrémité du dispositif annulaire adjacente à l'autre extrémité de ce dernier en vue de former ladite butée.

6. Goupille selon la revendication 5, caractérisée par le fait que ladite autre extrémité (109a) dudit goujon est biseautée de manière que ce goujon (109) forme une targette pour ladite partie d'extrémité (104a) du dispositif annulaire (104).

7. Goupille selon la revendication 5, caractérisée par le fait que ladite autre extrémité (209a) dudit goujon présente une encoche (214) opposée à une partie pleine (214a), ce goujon présentant un moyen (217) en vue de sa rotation pour disposer en face de ladite partie d'extrémité (204a) du dispositif annulaire (204) soit ladite encoche (214) soit ladite partie pleine (214a) qui forme ladite butée.

8. Goupille selon la revendication 5, caractérisée par le fait que des moyens de translation sont prévus pour déplacer transversalement ledit goujon dans ladite tête entre une position avancée dans laquelle ladite autre extrémité (309a) dudit goujon (309) forme ladite butée et une position de retrait dans laquelle ladite autre extrémité (309a) dudit goujon est dégagée et le dispositif annulaire (304) est libéré.

9. Goupille selon la revendication 8, caractérisée par le fait que ladite collerette formant épaulement (312) dudit goujon (309) et ladite tête (302) présente en vis-à-vis des surfaces inclinées (302a, 312a) et ledit goujon (309) présente un moyen en vue de sa rotation, de telle sorte que la rotation dudit goujon (309) permet le déplacement transversal de ce dernier par glissement desdites surfaces l'une sur l'autre entre ladite position avancée et ladite position de retrait.

10. Goupille selon la revendication 9, caractérisée par le fait que lesdites surfaces inclinées (302a, 302b, 312a) sont conformées pour maintenir ledit goujon à sa position avancée ou à sa position de retrait.

11. Goupille selon la revendication 2, caractérisée par le fait que ledit goujon transversal s'étend au travers de

0056228

ladite tête et présente au moins une encoche et une partie pleine formant butée, ce goujon étant déplaçable en vue de disposer soit sa partie pleine soit son encoche en face de la partie d'extrémité du dispositif annulaire adjacente à l'une de ses extrémités formant pivot.

12. Goupille selon la revendication 11, caractérisée par le fait que ladite encoche (414) et ladite partie pleine (414a) se suivent transversalement, des moyens étant prévus en vue de déplacer transversalement ledit goujon.

13. Goupille selon la revendication 11, caractérisée par le fait que ladite encoche (614) et ladite partie pleine (614a) sont opposées, des moyens étant prévus en vue de faire pivoter ledit goujon.

14. Goupille selon la revendication 2, caractérisée par le fait que ledit goujon transversal (4009) est fixé à ladite tête et dépasse latéralement en face d'au moins la partie d'extrémité (4004a) du dispositif annulaire adjacente à l'une de ses extrémités formant pivot, une cale (4016) étant déplaçable le long dudit goujon (4009) en vue d'être disposée entre ce goujon et ladite partie d'extrémité (4004a) du dispositif annulaire, et d'en être retirée.

15. Goupille selon l'une quelconque des revendications 11 à 14, caractérisée par le fait que ledit goujon transversal s'étend en avant du dispositif annulaire.

16. Goupille selon l'une quelconque des revendications 11 à 14, caractérisée par le fait que le dispositif annulaire (2004) présente au moins un prolongement (2004a) qui s'étend latéralement à ladite tête (2002) au delà de l'une de ses extrémités formant pivots (2005), ledit goujon transversal (2009) s'étendant au travers de ladite tête en arrière dudit prolongement (2004a).

17. Goupille selon la revendication 2, caractérisée par le fait que ledit goujon transversal (3009) est solidaire d'au moins une biellette (3021) qui est articulée sur ladite tête (3002) et qui est susceptible de pivoter de manière à disposer ledit goujon (3009) en avant du dispositif annulaire lorsque ce dernier est en position fermée.

18. Goupille selon la revendication 1, ladite broche (5003) présentant une encoche sensiblement axiale dans laquelle peut être introduit le dispositif annulaire, caractérisée par le fait qu'au moins l'une des extrémités formant pivot du dispositif annulaire (5004) est articulée dans un évidement latéral oblong (5027) de ladite tête (5002) et que ledit élément formant butée est un goujon ou pointeau qui, dans sa position avancée, pénètre dans ledit évidement et forme une butée pour ladite extrémité formant pivot du dispositif annulaire dans ledi évidement en vue de maintenir le dispositif annulaire dans ladite encoche (5026) de la broche (5003).

19. Goupille selon la revendication 1, caractérisée par le fait que ledit élément formant butée est constitué par au moins un bossage latéral (6030) prévu sur ladite tête (6002) et présentant une face transversale (6032) contre laquelle la partie d'extrémité (6004a) du dispositif annulaire adjacente à l'une desdites extrémités formant pivot bute lorsqu'il est à la position fermée, ledit bossage étant conformé en vue de permettre le pivotement du dispositif annulaire jusqu'à cette position fermée.

20. Goupille selon la revendication 1, caractérisée par le fait que ledit élément formant butée est un anneau (7024) solidaire du dispositif annulaire (7004) pour former avec ce dispositif annulaire un ressort en forme de V déformable, ledit anneau (7024) venant en appui contre une butée (7026) formée sur ladite tête (7002) en avant de cette dernière lorsque ledit ressort est en forme de V, en vue de maintenir le dispositif annulaire (7004) dans ladite position fermée.

21. Goupille selon la revendication 20, caractérisée par le fait le dispositif annulaire (7004) et ledit anneau (7024) ne forment qu'une seule pièce.

0056228

FIG.1

FIG.2

FIG.3

FIG.4

FIG.5

FIG.6

FIG.7

FIG.8

0056228

## FIG.9

406 404a 409 414a
408 402 405 401 404b
403 414 404 414b

## FIG.10

502 501 514
514a 517

## FIG.11

604a 602 601 604b 614a
614a
614 609 614
603 604

## FIG.12

709 701
714a 714a
714 714

## FIG.13

819 814 809 814

## FIG.14

912 909 914 915

## FIG.15

1009 1004

## FIG.16

2009 2001
2004a
2005 2002
2004

## FIG.17

3020 3001
3021a
3009 3002
3021
3004 3003

0056228

## FIG.18

4004a   4001
4016
4002
4009
4003   4004

## FIG.19

5002   5029
5027
5004
5001
5003
5026

## FIG.20

5009
5002
5027
5004
5001
5026   5003

## FIG.21

6002
6032
6001
6003

## FIG.22

6002   6031
6001   6030
6005   6004a
6004

## FIG.23

7002  7026   7001
7004
7024
7025
7003

## FIG.24

7001   7026
7004
7025

## FIG.25

7027